# EUROPEAN PATENT APPLICATION

(11) **EP 3 971 020 A1**
(43) Date of publication of application: **23.03.2022**
(21) Application number: 20207710.3
(22) Date of filing: 16.11.2020
(51) Int. Cl.: B60L 53/16, B60L 53/18

(54) **ELECTRIC VEHICLE CHARGER WITH INTERCHANGEABLE AC POWER PLUG**

(30) Priority: 21.09.2020 US 202017027334
(71) Applicant: Phihong Technology Co., Ltd., Taoyuan City 33383 (TW)
(72) Inventor: Shih-Hsin, Hsu, 33383 Taoyuan City (TW); Hsien-Hsi, Juan, Taoyuan City (TW)
(74) Representative: Lermer, Christoph

(57) **Abstract**

An electric vehicle charger with interchangeable AC power plug includes a first charge cord assembly having a first connector, an electrical vehicle charging control box with a first end electrically coupled to the first charge cord assembly and a second end electrically coupled to an electric vehicle, the first end of the electrical vehicle charging control box includes a second connector; wherein the first connector comprises a plurality of conduction terminals and an identification component, the second connector includes at least one active identification device arranged to mating the plurality of conduction terminals and the identification component for establishing electrical connection and for forming identification-sensor pair between the first connector and the second connector.

## Description

### TECHNICAL FIELD

The present invention relates to an electric vehicle charger, and more particularly, an electric vehicle charger with interchangeable AC power plug.

### BACKGROUND

Electrical power stored in all-electric and hybrid-electric vehicles, for example stored in a battery, is then drawn by the vehicle for converting into various needs, such as powering motors that drive vehicle's wheels and powering vehicle's electronic system that controls driving assist system, sensors, etc.

In the area of electric vehicle charging applications, plug connectors including an electrical locking function are provided for transmitting electrical energy from a charging device for charging a vehicle's secondary battery provided in the electric vehicle.

In order to charge a battery mounted on the electric vehicle, hybrid electric vehicle, etc., the vehicle is provided with a charging inlet device with which a charging connector is mated. A device plug can be provided at the charging device and at the electric vehicle, respectively, by means of a connecting cable at both ends with a cable connector corresponding to the device plug, such that an electrical connection can be established between the charging device and the vehicle.

Nowadays, an electric charging device, for example an electric vehicle supply equipment (EVSE) is normally a portable charging cord set that supplies alternating current (AC) electrical power to on-board battery chargers installed in electric vehicles or plug-in hybrid electric vehicles. Generally, there is only one standard plug installed for each kind of electric charging devices on the market, typically it can be a grid cord conforming to the National Electrical Manufactures Association (NEMA) NEMA 5-15 standard, i.e. NEMA 5-15P, NEMA 6-50P, or NEMA 14-50P, etc. However, the corresponding socket is typically connected to a circuit breaker, and its circuit overload is varied depended on the specification of the socket. For example, the circuit overload of a circuit breaker for NEMA 5-15P is 15-20A, the circuit overload of a circuit breaker for NEMA 6-50P is 50-60A. If a charging device can output a maximum current of 50A, it will be disconnected when a NEMA 5-15P plug is used. Therefore, the charging device must be able to identify the type of the plug avoiding the circuit overload and be able to adjust the maximum current output accordingly.

To meet the above purposes, an electric vehicle charger with interchangeable AC power plug is developed for charging electric vehicles equipped with various socket standards. However, this also means risks may occur, such as short circuit or local heat accumulation, causing overheating and starting a fire, while uses an electric vehicle charger with interchangeable AC power plug.

Therefore, it is still required for developing an electric vehicle charger with interchangeable AC power plug that allows flexibility by adding novel identification system and engaging mechanism.

### SUMMARY OF THE INVENTION

The purpose of the present invention is to provide an electric vehicle charger with interchangeable AC power plug. The electric vehicle charger with interchangeable AC power plug includes a first charge cord assembly having a first connector, an electrical vehicle charging control box with a first end electrically coupled to the first charge cord assembly and a second end electrically coupled to an electric vehicle, the first end of the electrical vehicle charging control box includes a second connector; wherein the first connector comprises a plurality of conduction terminals and an identification component, the second connector includes at least one active identification device arranged to mating the plurality of conduction terminals and the identification component for establishing electrical connection and for forming identification-sensor pair between the first connector and the second connector.

In one preferred embodiment, the first charge cord assembly comprises an AC plug electrically connected to the first connector.

In one preferred embodiment, the electrical vehicle charging control box comprises a controller and a second charge cord assembly with one end electrically coupled to the controller and the other end electrically coupled to the electric vehicle.

In one preferred embodiment, the second charge cord assembly is an electric vehicle inlet plug.

In one preferred embodiment, the electric charging control box further comprises: an power conduit having a first end connected to the second connector and configured to convey a voltage from a connected power source to the electric vehicle; a relay placed inline with the power conduit; a ground fault interrupter disposed between the relay and a vehicle connector connected to a second end of the power conduit; and a control circuit electrically connected to the active identification device , the relay, the ground fault interrupter, and the power conduit.

In one preferred embodiment, the formation of the identification-sensor pair between the first connector and the second connector can be utilized to recognize type of the AC plug for adjusting maximum output current of the charger.

In one preferred embodiment, the identification-sensor pair between the first connector and the second connector is a magnet-reed switch pair.

In one preferred embodiment, the identification-sensor pair between the first connector and the second connector is a magnet-Hall sensor pair.

In one preferred embodiment, the identification-sensor pair between the first connector and the second connector is a light source-light detector pair.

In one preferred embodiment, the identification-sensor pair between the first connector and the second connector is a pusher element-mechanical switch pair.

In one preferred embodiment, the control circuit is configured to receive an electrical signal from the active identification device when the identification-sensor pair is formed for adjusting maximum output current of the charger.

In one preferred embodiment, the relay is configured to control voltage along the power conduit in response to a signal received from the control circuit.

In one preferred embodiment, the ground fault interrupter is configured to disconnect the power source.

In one preferred embodiment, the power conduit further comprises at least two power supply conduits.

### BRIEF DESCRIPTION OF THE DRAWINGS

The components, characteristics and advantages of the present invention may be understood by the detailed descriptions of the preferred embodiments outlined in the specification and the drawings attached:
FIG. 1 illustrates an electric vehicle charger with interchangeable AC power plug according to a preferred embodiment of the present invention.
FIG. 2 illustrates details of the connection between the first connector of the first charge cord assembly and the second connector of the controller according to a preferred embodiment of the present invention.
FIG. 3 illustrates schematic diagram of the connection between the first connector of the first charge cord assembly and the second connector of the controller according to a preferred embodiment of the present invention.
FIG. 4 illustrates schematic circuit diagram of an electric vehicle charger with interchangeable AC power plug according to a preferred embodiment of the present invention.

### DETAILED DESCRIPTION

Some preferred embodiments of the present invention will now be described in greater detail. However, it should be recognized that the preferred embodiments of the present invention are provided for illustration rather than limiting the present invention. In addition, the present invention can be practiced in a wide range of other embodiments besides those explicitly described, and the scope of the present invention is not expressly limited except as specified in the accompanying claims.

The purpose of the present invention is to develop an electric vehicle charger with interchangeable AC power plug that allows flexibility by adding novel identification system and engaging mechanism.

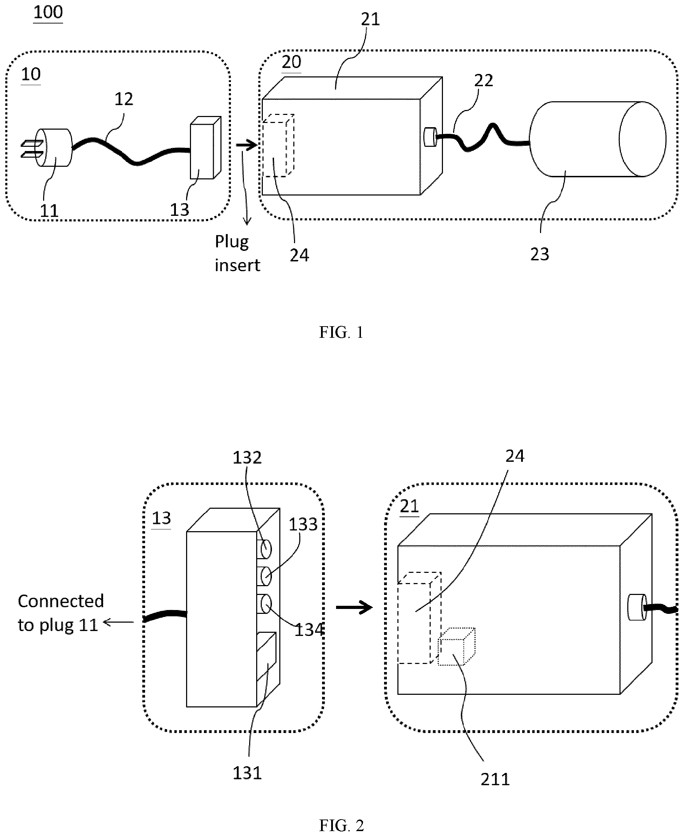

FIG. 1 illustrates an electric vehicle charger 100 with interchangeable AC power plug, which includes a first charge cord assembly 10 electrically coupled to an electrical vehicle charging control box 20. In one of the preferred embodiments of the present invention, the first charge cord assembly 10 is consisted of a standard AC plug 11 and a first connector 13 connected by a first conduction cable 12. The electrical vehicle control box 20 includes a controller 21 having a second connector 24 electrically coupled to a second charge cord assembly (vehicle inlet plug) 23 via a second conduction cable 22. In one preferred embodiment, the electrical vehicle control box 20 is an in-cable control box, which includes a mating connector 24 connected to the first connector 13 on the first charge cord assembly 10. The first charge cord assembly 10 may be conveniently referred to as an input cord assembly because the electrical vehicle control box 20 receives power from a power supply through the first charge cord assembly 10. Similarly, the second charge cord assembly (vehicle inlet plug) 23 may be conveniently referred to as an output cord assembly because the electrical vehicle control box 20 outputs power to an electric vehicle. The connection between first charge cord assembly 10 and the electrical vehicle control box 20 is a friction-type connection.

Referring to FIG. 2, it illustrates details of the connection between the first connector 13 and the second connector 24. On the left of FIG. 2, which illustrates that the first connector 13 includes an identification component 131 and a plurality of power terminals 132, 133, 134. On the right of FIG. 2, which shows that the controller 21 contains a second connector 24 and at least one active identification device 211. The second connector 24 is mating to the first connector 13 for transferring AC electric power and identification signal of the active identification device 211 to the controller 21. In one of the preferred embodiments of the present invention, when the second connector 24 is mating to the first connector 13, AC electric power can pass to the controller via the plurality of power terminals 132, 133, 134 and their corresponding receptacle pairs, similarly the identification component 131 can engage with the active identification device 211 to form an identification-sensor pair for identifying types and the circuit overloads of power plug 11. Power terminals 132, 133, 134 can be represented as two electrical connection pins i.e., Line (L), Neutral (N) and ground pin (G), respectively. In this invention, various types of AC plug, such as NEMA type, CEE type, AS/NZs type of AC plugs can be interchanged. In one embodiment, the active identification device 211 can be set to have at least one identification device for accommodating more than one type of AC cord.

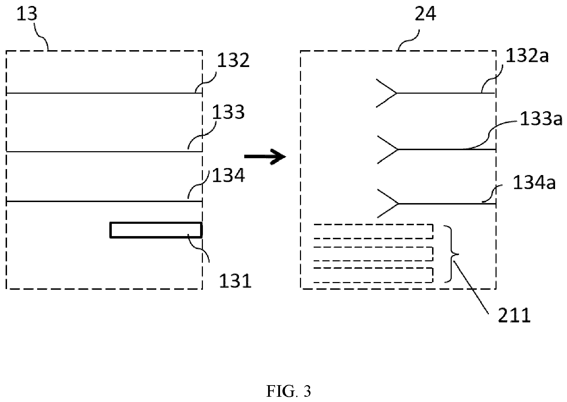

FIG. 3 shows in the form of schematic diagram, to illustrate the connection between the first connector 13 and the second connector 24. Power terminals 132, 133, 134 in the first connector 13 insert into the second connector 24 and coupled to corresponding receptacles 132a, 133a, 134a to form terminal-receptacle pairs, at the same time the identification component 131 can engage with the active identification device 211 to form an identification-sensor pair. The active identification device 211 can contain more than one identification device for the purpose of mating with various types of AC cord. The identification-sensor pair can be arranged as a magnet-reed switch pair, a magnet-Hall sensor pair, a light source-light detector pair, or a pusher element-mechanical switch pair, etc.. In one embodiment, the magnet can be a permanent magnet installed in the first connector 13 of the first charge cord assembly 10, as the first connector 13 been inserted into the second connector 24 where a reed switch (act as active identification device 211) located inside the second connector 24 has been effected by magnetic field produced by the magnet and passes from its open position to a closed position, thereby issuing an electrical signal to the controller 21(shown in FIG. 1). The controller 21 can identify types and the circuit overloads of power plug 11 after engaging the identification component 131 and the active identification device 211. Similarly, the reed switch can be replaced by a Hall-effect sensor. The Hall-effect sensor issues an electrical signal when it is immersed in the magnetic field. The electrical signal is therefore issued when the Hall-effect sensor is proximate to the magnet of the first connector, which is inevitably occurred when the first connector 13 is inserted into the second connector 24. Therefore, the controller 21 can identify types and the circuit overloads of power plug 11 after engaging the identification component 131 and the active identification device 211. It is also true when other types of identification-sensor pairs, for example, a light source-light detector pair, or a pusher element-mechanical switch pair, is formed an electrical signal can be issued and forward to the controller 21 for identifying types and the circuit overloads of power plug 11. Once the type of plug is recognized, the controller can therefore adjust the maximum output current of the charger.

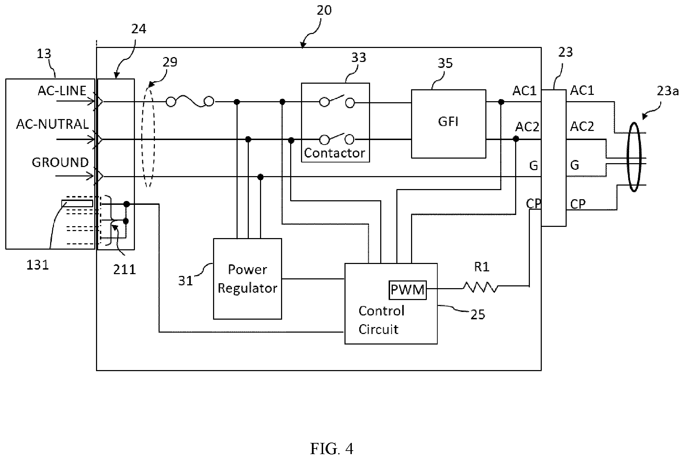

FIG. 4 illustrates the circuit diagram of the AC charger, which includes a first connector 13 electrical connected to an AC plug 11 (shown in FIG. 1) and an electrical vehicle charging control box 20 with a second connector 24 adapted to make electrical connection to the AC plug through the first connector 13. Inside the electrical vehicle charging control box 20, there is a control circuit 25 and may further include a relay 33 (contactor), a voltage regulator 31, and a breaking device 35 (GFI), some or all of which may be connected by a power conduit 29. The power conduit includes at least two power conduits, AC line (L) and AC neutral (N). Ground (G) is connected to equipment ground. In one embodiment, the control circuit 25 can be a microcontroller unit (MCU), a microprocessor, or a central processor unit (CPU). At one end of the electrical vehicle charging control box 20 is the second connector 24 and at the other end is a vehicle connector 23. The voltage regulator 31 is utilized to power the electronic component of the electrical vehicle charging control box 20. Since the electrical vehicle charging control box 20 may draw its power from the same electric socket used to charge the batteries of the electric vehicle, the electrical vehicle charging control box 20 will be receiving high voltage electricity, for example 120 volts, 220 volts, or 240 volts. The high voltage of the power drawn from the electrical socket could damage some of the electronic components of the electrical vehicle charging control box 20. Thus, the voltage regulator 31 may be employed between the electrical socket and the electronic components of the electrical vehicle charging control box 20. The voltage may then be lowered to a level that is manageable to the electronic components, for example, 5 volts or 12 volts.

The breaking device 35 is a ground fault interrupter (GFI) that interrupts the charging process upon sensing a ground fault in response to a signal received from the control circuit 25. A pulse width modulated (PWM) signal is generated by an oscillator (not shown) within the control circuit 25. The oscillator provides a square wave 1KHz output that is limited to 20% duty cycle pulse width modulated signal. The pulse width is limited to provide a fixed level of current to the charging system for safety reason. The level of current permitted to flow through the charging system may be limited depending on the branch circuit breaker rating of the receptacle. The pulse width modulated signal is provided through the control pilot (CP) receptacle to the on board vehicle charging system. The pulse width modulated signal is provided to resistor R1.

The electrical vehicle charging control box 20 is connected to a vehicle inlet plug 23a that has pins corresponding to AC line one (AC1) receptacle, AC line two (AC2) receptacle, ground (G) receptacle, control pilot (CP) receptacle, and proximity detection receptacle (not shown).

As mentioned, when the first connector 13 of the AC charger is adapted to make connection with the electrical vehicle charging control box 20 via the second connector 24, the controller 21 can identify types and the circuit overloads of power plug 11 after the formation of an identification-sensor pair. Once the identification-sensor pair is formed an electrical signal can be passed from the active identification device 211 to the control circuit 25 and the control circuit 25 can therefore adjust the maximum output current of the charger through sending out a corresponding control pilot (CP) signal. With this design, it is possible to distinguish if the type of the plug is adapted to be capable of delivering a high-amperage current, and then therefore adjust the maximum charging current of the charging system.

As will be understood by persons skilled in the art, the foregoing preferred embodiment of the present invention illustrates the present invention rather than limiting the present invention. Having described the invention in connection with a preferred embodiment, modifications will be suggested to those skilled in the art. Thus, the invention is not to be limited to this embodiment, but rather the invention is intended to cover various modifications and similar arrangements included within the spirit and scope of the appended claims, the scope of which should be accorded the broadest interpretation, thereby encompassing all such modifications and similar structures. While the preferred embodiment of the invention has been illustrated and described, it will be appreciated that various changes can be made without departing from the spirit and scope of the invention.

## Claims

1. An electric vehicle charger with interchangeable AC power plug, the electric vehicle charger **characterized by** comprising:
a first charge cord assembly having a first connector;
an electrical vehicle charging control box with a first end electrically coupled to the first charge cord assembly and a second end electrically coupled to an electric vehicle, the first end of the electrical vehicle charging control box includes a second connector;
wherein the first connector comprises a plurality of conduction terminals and an identification component, the second connector includes at least one active identification device and a plurality of receptacles arranged to mate the plurality of conduction terminals and the identification component for establishing electrical connection and for forming identification-sensor pair between the first connector and the second connector.

2. The electric vehicle charger of claim 1, **characterized in that** the first charge cord assembly comprises an AC plug electrically connected to the first connector.

3. The electric vehicle charger of claim 1, **characterized in that** the electrical vehicle charging control box comprises:
a controller; and
a second charge cord assembly with one end electrically coupled to the controller and the other end electrically coupled to the electric vehicle.

4. The electric vehicle charger of claim 3, **characterized in that** the electric charging control box further comprises:
an power conduit having a first end connected to the second connector and configured to convey a voltage from a connected power source to the electric vehicle;
a relay placed inline with the power conduit;
a ground fault interrupter disposed between the relay and a vehicle connector connected to a second end of the power conduit; and
a control circuit electrically connected to the active identification device , the relay, the ground fault interrupter, and the power conduit.

5. The electric vehicle charger of claim 3, **characterized in that** the second charge cord assembly is an electric vehicle inlet plug.

6. The electric vehicle charger of claim 2, **characterized in that** formation of the identification-sensor pair between the first connector and the second connector can be utilized to recognize type of the AC plug for adjusting maximum output current of the charger.

7. The electric vehicle charger of claim 1, **characterized in that** the identification-sensor pair between the first connector and the second connector is a magnet-reed switch pair.

8. The electric vehicle charger of claim 1, **characterized in that** the identification-sensor pair between the first connector and the second connector is a magnet-Hall sensor pair.

9. The electric vehicle charger of claim 1, **characterized in that** the identification-sensor pair between the first connector and the second connector is a light source-light detector pair.

10. The electric vehicle charger of claim 1, wherein the identification-sensor pair between the first connector and the second connector is a pusher element-mechanical switch pair.

11. The electric vehicle charger of claim 4, **characterized in that** the control circuit is configured to receive an electrical signal from the active identification device when the identification-sensor pair is formed for adjusting maximum output current of the charger.

12. The electric vehicle charger of claim 4, **characterized in that** the relay is configured to control voltage along the power conduit in response to a signal received from the control circuit.

13. The electric vehicle charger of claim 4, **characterized in that** the ground fault interrupter is configured to disconnect the power source.

14. The electric vehicle charger of claim 4, **characterized in that** the power conduit further comprises at least two power supply conduits.
